# EUROPEAN PATENT APPLICATION

(11) **EP 2 511 908 A2**
(43) Date of publication of application: **17.10.2012**
(21) Application number: 10836231.0
(22) Date of filing: 10.12.2010
(51) Int. Cl.: G11B 20/10

(54) **AUDIO AUTHORING APPARATUS AND AUDIO PLAYBACK APPARATUS FOR AN OBJECT-BASED AUDIO SERVICE, AND AUDIO AUTHORING METHOD AND AUDIO PLAYBACK METHOD USING SAME**

(30) Priority: 11.12.2009 KR 20090122839
(71) Applicant: Electronics and Telecommunications Research Institute, Daejeon 305-700 (KR); Nsonix, Inc, Seoul 150-946 (KR)
(72) Inventor: LEE, Yong Ju, Daejeon 305-700 (KR); LEE, Tae Jin, Daejeon 305-700 (KR); KANG, Kyeong Ok, Daejeon 305-700 (KR); KIM, Jin Woong, Daejeon 305-700 (KR); LIM, Chang Soo, Seoul 150-946 (KR)
(74) Representative: Betten & Resch
(86) International application number: PCT/KR2010/008850
(87) International publication number: WO 2011/071336

(57) **Abstract**

An audio producing apparatus and an audio playing apparatus for an object-based audio service, and an audio producing method and an audio playing method using the same are provided. The producing apparatus and the audio playing apparatus supplies the object-based audio service, using audio object signals corresponding to a number of audio channels processable by the audio playing apparatus.

## Description

### Technical Field

The present invention relates to an audio producing apparatus and an audio playing apparatus for an object-based audio service, and an audio producing method and an audio playing method using the same, and more particularly to an audio playing apparatus for producing and editing an object-based audio signal according to a number of processable channels.

### Background Art

An object-based audio service encodes, stores, and decodes an instrumental sound and vocal sound, independently corresponding to an audio object, without mixing, thereby enabling a user to separately control a musical instrument and a vocal sound.

The object-based audio service is being provided in the form of a personal computer (PC)-executable program, for example, a commercial service called Music 2.0. Music 2.0 provides various types of object-based audio service, one of which is an audio compact disc (CD) containing Music 2.0 contents in the form of a bundle program. Through a general CD player, audio contents stored on the audio CD in the form of pulse code modulation (PCM) are played. According to another type of Music 2.0, a user may execute the Music 2.0 contents on the web, or execute downloaded Music 2.0 contents on the PC.

Therefore, there is a need for a method capable of conveniently storing, preserving, and managing audio object signals such as the instrumental sound or vocal sound, for more efficient use of the object-based audio service such as Music 2.0.

### Disclosure of Invention

### Technical Goals

An aspect of the present invention provides an apparatus and method capable of more conveniently storing, preserving, and managing audio object signals for use of an object-based audio service.

Another aspect of the present invention provides an apparatus and method capable of supplying an audio service desired by a user, by controlling audio object signals per channel.

### Technical solutions

According to an aspect of the present invention, there is provided an audio producing apparatus including an object signal editing unit to edit audio object signals based on a number of audio channels processable by an audio playing apparatus; and an object signal storage unit to store the edited audio object signals.

The audio producing apparatus may further include a preset storage unit to store presets which represent setting information related to the edited audio object signals.

According to an aspect of the present invention, there is provided an audio playing apparatus including an object signal extraction unit to extract audio object signals corresponding to a number of audio channels processable by the audio playing apparatus; an object signal control unit to control the extracted audio object signals in accordance with a control request of a user; and an object signal play unit to play the controlled audio object signals.

According to an aspect of the present invention, there is provided an audio producing method performed by an audio producing apparatus that stores audio object signals, the method including editing the audio object signals based on a number of audio channels processable by the audio producing apparatus; and storing the edited audio object signals.

The audio producing method may further include storing presets which represent setting information related to the edited audio object signal.

According to an aspect of the present invention, there is provided an audio playing method performed by an audio playing apparatus, the method including extracting audio object signals corresponding to a number of audio channels processable by the audio playing apparatus; controlling the extracted audio object signals in accordance with a control request of a user; and playing the controlled audio object signals.

### Effects of Invention

According to an embodiment of the present invention, audio object signals may be more conveniently stored, preserved, and managed for efficient use of an object-based audio service.

In addition, an audio service desired by a user may be supplied since audio object signals are controlled per channel.

### Brief Description of Drawings

FIG. 1 is a block diagram illustrating an audio producing apparatus and an audio playing apparatus, according to an embodiment;
FIG. 2 is a block diagram illustrating a detailed structure of an audio producing apparatus according to an embodiment;
FIG. 3 is a block diagram illustrating a detailed structure of an audio playing apparatus according to an embodiment;
FIG. 4 is a flowchart illustrating an audio producing method according to an embodiment; and
FIG. 5 is a flowchart illustrating an audio playing method according to an embodiment.

### Best Mode for Carrying Out the Invention

Reference will now be made in detail to embodiments of the present invention, examples of which are illustrated in the accompanying drawings.

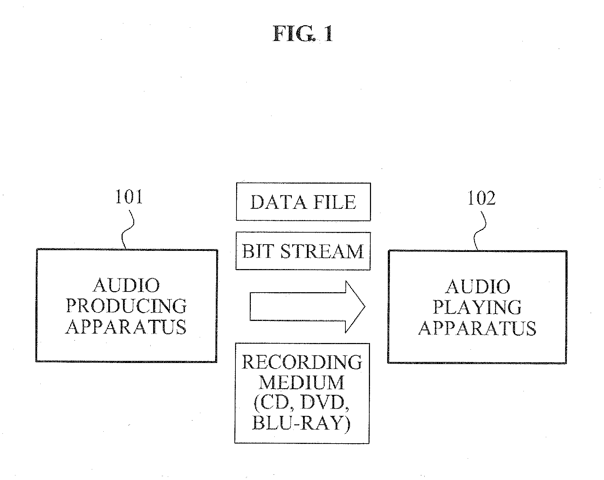

FIG. 1 is a block diagram illustrating an audio producing apparatus 101 and an audio playing apparatus 102, according to an embodiment.

Referring to FIG. 1, the audio producing apparatus 101 and the audio playing apparatus 102 are adapted to more conveniently store, preserve, and manage audio object signals such as an instrumental sound, a vocal sound, and the like, for an object-based audio service.

A compact disc (CD), a digital versatile disc (DVD), and a Blu-ray disc are commonly used as recording mediums for storage and distribution of contents including a movie, an audio file, and the like. The CD may store stereo audio signals. The DVD and the Blu-ray disc may store multichannel audio signals of a multichannel such as a 5.1 channel, as well as the stereo audio signals.

The audio producing apparatus 101 may be able to conveniently store, preserve, and manage object-based audio contents, by storing audio object signals in audio channels for supplying a user with surround sound audio signals through a recording medium such as the DVD and the Blu-ray disc. Here, the surround sound audio signals are generated by a producer editing and producing various audio signals according to a surround sound, so that audio contents are played realistically in an acoustic reproduction environment such as a 5.1 channel and a 7.1 channel. The audio object signals refer to signals generated per audio sound source.

When thus-produced audio object signals are stored in the recording medium such as the DVD and the Blu-ray disc, the audio playing apparatus 102 may downmix the multichannel audio signals stored in the DVD or the Blu-ray disc into stereo audio signals to play the audio object signals. Since conventional DVD or Blu-ray disc players are not capable of controlling a sound volume for each of the audio channels, a function to increase a sound volume of each channel needs to be added for control of the audio object signals. Thus, the audio playing apparatus 102, having the function of controlling the sound volume of each channel, is capable of controlling the respective audio object signals like an object-based audio service.

Although FIG. 1 has been explained with respect to the recording mediums including the CD, the DVD, and the Blu-ray disc, the same principle may be applied when the object-based audio service is provided in the form of a data file (MP3), a bit stream, and the like. However, when being in the form of the data file or the bit stream, the object-based audio service is applicable only to a multimedia file including audio or video contents that support the surround sound of the 5.1 channel or higher because the object-based audio service uses a specific independent file format. Accordingly, the embodiments of the present invention provide an apparatus and method capable of supplying the object-based audio service even in general formats such as the DVD and the Blu-ray disc formats. Hereinafter, the embodiments will be described with respect to the recording mediums.

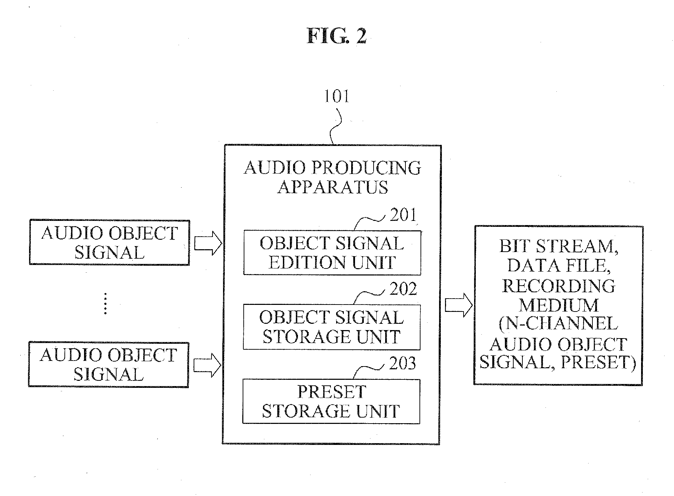

FIG. 2 is a block diagram illustrating a detailed structure of an audio producing apparatus 101 according to an embodiment.

Referring to FIG. 2, the audio producing apparatus 101 may include an object signal editing unit 201, an object signal storage unit 202, and a preset storage unit 203.

The object signal editing unit 201 may edit audio object signals based on a number of audio channels processable by an audio playing apparatus. For example, the object signal editing unit 201 may mix part of the audio object signals and edit the mixed audio object signals to correspond to the number of the audio channels used in the audio playing apparatus.

For example, more specifically, when the audio playing apparatus is capable of processing audio object signals of a 5.1 channel and a 7.1 channel, the object signal editing unit 201 may mix the audio object signals according to the number of the audio channels processable by the audio playing apparatus.

The object signal storage unit 202 may store the audio object signals edited by the object signal editing unit 201. For example, the object signal storage unit 202 may store the edited audio object signals in respective audio channels of recording mediums such as a CD, a DVD, a Blu-ray disc, and the like. That is, the audio producing apparatus 101 according to the embodiment may store the audio object signals in the respective audio channels in a multichannel audio recording medium such as the DVD and the Blu-ray disc.

For example, when supplying the 5.1 channel audio object signals processable in the audio playing apparatus, the object signal storage unit 202 may store an audio object signal containing a voice of a singer, in the form of a mono signal in a center channel, and may store a background audio object signal in the form of a stereo signal in a front left channel and a front right channel. In addition, the object signal storage unit 202 may store an audio object signal containing sounds of stereo instruments such as a piano, a keyboard, a synthesizer, and the like, in a rear left channel and a rear right channel, and may store an audio object signal containing sounds of solo instruments such as a guitar, a saxophone, and the like, in a low frequency effect (LFE) channel.

In additionally, when supplying the 7.1 channel audio object signals processable in the audio playing apparatus, the object signal storage unit 202 may store an audio object signal containing a voice of a singer, in the form of a mono signal in a center channel, and may store a background audio object signal in the form of a stereo signal in a front left channel and a front right channel. In addition, the object signal storage unit 202 may store an audio object signal containing sounds of stereo instruments such as a piano, a keyboard, a synthesizer, and the like, in a rear left channel and a rear right channel, and may store an audio object signal containing sounds of solo instruments such as a guitar, a saxophone, and the like, in a low frequency effect (LFE) channel. Additionally, in a stereo audio channel which is remaining, the object signal storage unit 202 may store an original downmix signal. When the CD, the DVD, and the Blu-ray disc thus supplied with the signals are played by the audio playing apparatus, the respective audio object signals may be played in the respective channels in the multichannel environment. In a stereo reproduction environment, all the audio object signals are played, as being downmixed to the stereo signals.

In other words, for playing of the surround sound, the audio producing apparatus 101 stores the respective audio object signals being edited and produced by mixing the audio object signals corresponding to the number of the audio channels processable by the audio playing apparatus, rather than storing the edited and produced multichannel audio signals per channel in the CD, the DVD, and the Blu-ray disc.

The preset storage unit 203 may store presets which represent setting information related to the audio object signals edited by the object signal editing unit 201. In other words, the presets may be information containing properly set characteristics of the respective audio object signals.

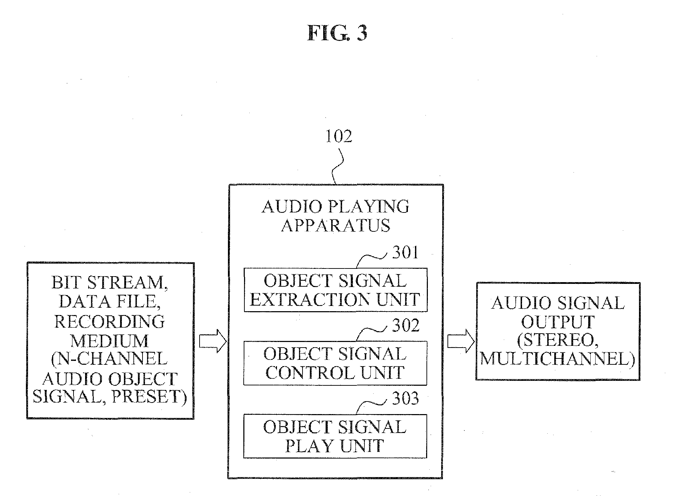

FIG. 3 is a block diagram illustrating a detailed structure of an audio playing apparatus 102 according to an embodiment.

Referring to FIG. 3, the audio playing apparatus 102 may include an object signal extraction unit 301, an object signal control unit 302, and an object signal play unit 303.

The object signal extraction unit 301 may extract audio object signals corresponding to a number of audio channels processable by the audio playing apparatus 102, from a recording medium, a data file, or a bit stream. Here, the object signal extraction unit 301 may use audio object signals mixed according to the number of the audio channels processable by the audio playing apparatus 102.

The object signal control unit 302 may control the extracted audio object signals in accordance with a control request of a user. For example, the control request may be related to a magnitude of the respective audio object signals. According to the control request, the object signal control unit 302 may control the audio object signals for the object-based audio service.

Also, for example, the object signal control unit 302 may set a magnitude of the audio object signal containing a voice of a singer to 0 in accordance with the control request of the user, so that the voice of the singer is not played. On the other hand, the object signal control unit 302 may set the magnitude of the audio object signal containing the voice of the singer to 1 while setting a magnitude of the other audio object signals to 0, so that only the voice of the singer is played. Thus, the object signal control unit 302 may control the magnitude of the audio object signals and the like, in accordance with control information of the audio object signals as set by the user.

As another example, the object signal control unit 302 may control the audio object signals based on a preset selected by the user among the presets which represent the setting information of the audio object signals. In other words, when the presets are multiple, the object signal control unit 302 may control the audio object signals based on the preset selected by the user.

The object signal play unit 303 may play the controlled audio object signals. That is, in a case that the audio object signals are controlled by the object signal control unit 302, the object signal play unit 303 may play the controlled audio object signals.

More specifically, the object signal play unit 303 may directly play and output the audio object signals edited and produced according to the number of the audio channels processable by the audio playing apparatus 102. If the audio playing apparatus 102 is capable of outputting only stereo signals of 2 channels, the object signal play unit 303 may downmix the audio object signals edited and produced based on the 5.1 channel or the 7.1 channel and then play the downmixed audio object signals.

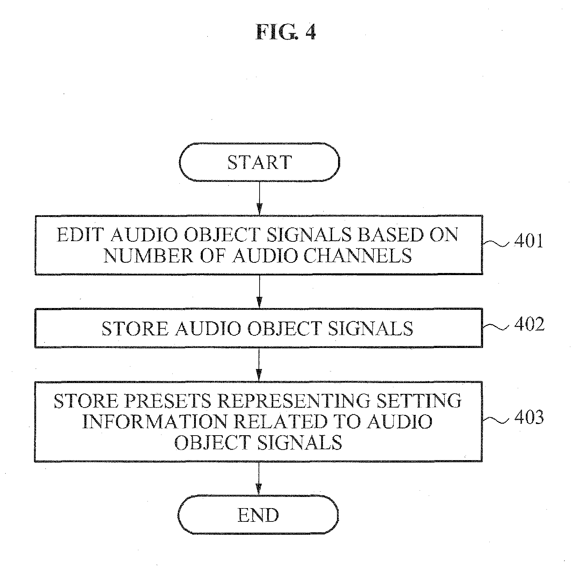

FIG. 4 is a flowchart illustrating an audio producing method according to an embodiment.

In operation 401, an audio producing apparatus 101 may edit audio object signals based on a number of audio channels processable by an audio playing apparatus. The audio producing 101 may perform the editing by mixing the audio object signals corresponding to the number of the processable audio channels.

In operation 402, the audio producing apparatus 101 may store the edited audio object signals. For example, the audio producing apparatus 101 may store the edited audio object signals in the audio channels.

In operation 403, the audio producing apparatus 101 may store presets representing setting information related to the edited audio object signals.

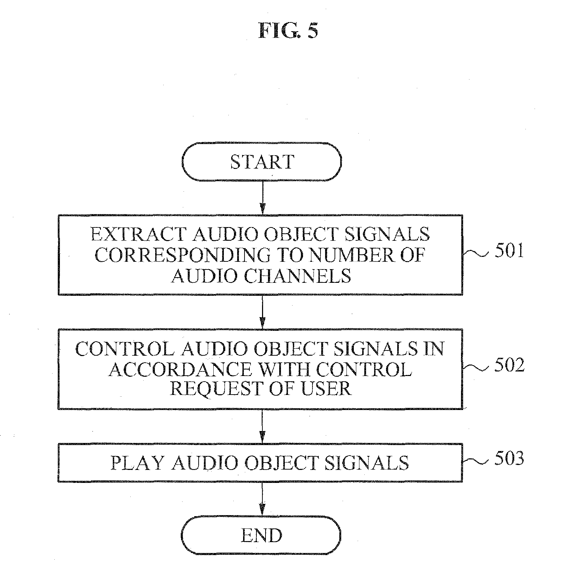

FIG. 5 is a flowchart illustrating an audio playing method according to an embodiment.

In operation 501, an audio playing apparatus 102 may extract audio object signals corresponding to a number of audio channels processable by an audio playing apparatus 102. Here, the audio playing apparatus 102 may use the audio object signals mixed according to the number of the processable audio channels.

In operation 502, the audio playing apparatus 102 may control the extracted audio object signals in accordance with a control request of a user. In addition, the audio playing apparatus 102 may control the extracted audio object signals in accordance with the control request related to a magnitude of the respective audio object signals.

In operation 503, the audio playing apparatus 102 may play the extracted audio object signals. For example, the audio playing apparatus 102 may play the audio object signals controlled according to presets in operation 502.

The methods according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

### Reference numerals

101: audio producing apparatus 102: audio playing apparatus

## Claims

1. An audio producing method performed by an audio producing apparatus that stores audio object signals, the method comprising:
editing the audio object signals based on a number of audio channels processable by the audio producing apparatus; and
storing the edited audio object signals.

2. The audio producing method of claim 1, wherein the editing of the audio object signals mixes part of the audio object signals corresponding to the number of the audio channels processable by the audio producing apparatus.

3. The audio producing method of claim 1, wherein the storing of the edited audio object signals stores the edited audio object signals in the audio channels.

4. The audio producing method of claim 1, further comprising:
storing presets which represent setting information related to the edited audio object signal.

5. An audio playing method performed by an audio playing apparatus, the method comprising:
extracting audio object signals corresponding to a number of audio channels processable by the audio playing apparatus;
controlling the extracted audio object signals in accordance with a control request of a user; and
playing the controlled audio object signals.

6. The audio playing method of claim 5, wherein the extracting of the audio object signals uses an audio object signal mixed according to the number of the audio channels processable by the audio playing apparatus.

7. The audio playing method of claim 5, wherein the controlling of the extracted audio object signals controls the audio object signals in accordance with the control request related to a magnitude of the respective audio object signals.

8. The audio playing method of claim 5, wherein the controlling of the extracted audio object signals controls the audio object signals based on a preset selected by the user among presets which represent setting information of the audio object signals.

9. An audio producing apparatus comprising:
an object signal editing unit to edit audio object signals based on a number of audio channels processable by an audio playing apparatus; and
an object signal storage unit to store the edited audio object signals.

10. The audio producing apparatus of claim 9, wherein the object signal editing unit mixes part of the audio object signals corresponding to the number of the audio channels processable by the audio playing apparatus.

11. The audio producing apparatus of claim 10, wherein the object signal storage unit stores the edited audio object signals in the audio channels.

12. The audio producing apparatus of claim 9, further comprising:
a preset storage unit to store presets which represent setting information related to the edited audio object signals.

13. An audio playing apparatus comprising:
an object signal extraction unit to extract audio object signals corresponding to a number of audio channels processable by the audio playing apparatus;
an object signal control unit to control the extracted audio object signals in accordance with a control request of a user; and
an object signal play unit to play the controlled audio object signals.

14. The audio playing apparatus of claim 13, wherein the object signal extraction unit uses an audio object signal mixed according to the number of the audio channels processable by the audio playing apparatus

15. The audio playing apparatus of claim 13, wherein the object signal control unit controls the audio object signal in accordance with the control request by the user.

16. The audio playing apparatus of claim 13, wherein the object signal control unit controls the audio object signals based on a preset selected by the user among the presets which represent setting information of the audio object signals.

17. A non-transitory computer readable recording medium recorded with audio object signals edited according to a number of audio channels by processable an audio playing apparatus.

18. The non-transitory computer readable recording medium of claim 17, wherein the recording medium records the audio object signals which are mixed and edited according to the number of the audio channels processable by the audio playing apparatus.

19. The non-transitory computer readable recording medium of claim 17, wherein the recording medium stores presets which represent setting information of the audio object signals.

20. The non-transitory computer readable recording medium of claim 17, wherein the recording medium records the edited audio object signals in the audio channels.
